# EUROPÄISCHE PATENTANMELDUNG

(11) **EP 1 566 901 A1**
(43) Veröffentlichungstag der Anmeldung: **24.08.2005**
(21) Anmeldenummer: 04003630.3
(22) Anmeldetag: 18.02.2004
(51) Int. Cl.: H04B 7/26, H04L 27/26

(54) **Verfahren zur Synchronisation eines in Funkzellen aufgeteilten Funkkommunikationssystems**

(71) Anmelder: SIEMENS AKTIENGESELLSCHAFT, 80333 München (DE)
(72) Erfinder: Magula, Branislav, SK-919 26 Zavar (SK); Slanina, Peter, A-3441 Judenau (AT)

(57) **Zusammenfassung**

Die Erfindung betrifft ein verfahren zur Synchronisation eines in Funkzellen aufgeteilten Funkkommunikationssystems, bei dem in den Funkzellen Daten mittels Vielfachzugriffsverfahren zwischen einer der jeweiligen Funkzelle zugeordneten Basisstation einerseits und Funkkommunikationsendgeräten der Funkzelle andererseits übertragen werden. Dabei signalisiert jede Basisstation ein individuell zugeordnetes Pilotsignal in einer Abwärtsrichtung. Zumindest ein Funkkommunikationsendgerät einer ersten Funkzelle empfängt sowohl das Pilotsignal einer ersten Basisstation, die der ersten Funkzelle zugeordnet ist, als auch Pilotsignale von zumindest einer weiteren benachbarten Basisstation und bestimmt aus den empfangenen Pilotsignalen einen Synchronisationswert für eine Zeitsynchronisation und/oder für eine Frequenzsynchronisation. Die erste Basisstation verwendet den von dem zumindest einen Funkkommunikationsendgerät zurückübertragenen Synchronisationswert zur eigenen Synchronisation.

## Beschreibung

Verfahren zur Synchronisation eines in Funkzellen aufgeteilten Funkkommunikationssystems

Die Erfindung betrifft ein Verfahren zur Synchronisation eines in Funkzellen aufgeteilten Funkkommunikationssystems gemäß dem Oberbegriff des Patentanspruchs 1.

Bei zellularen Funkkommunikationssystemen, insbesondere Mobilfunksystemen, werden Basisstationen benachbarter Funkzellen zueinander zeitlich und/oder hinsichtlich der Frequenz synchronisiert. Beispielsweise werden zur Zeitsynchronisation seitens der Basisstationen GPS-Empfänger verwendet oder es werden Synchronisationssignale zwischen den Basisstationen ausgetauscht. Dabei werden Funkübertragungsressourcen belegt, die nachteilig nicht mehr für eine gebührenpflichtige Teilnehmer-Nutzdatenübertragung (Payload) zur Verfügung stehen.

Insbesondere bei den Mobilfunksystemen gewinnen so genannte "Orthogonal-Frequency-Division-Multiplexing, OFDM" - Übertragungsverfahren immer mehr an Bedeutung. Beispielsweise werden Videoübertragungen mit hohen Datenraten mittels OFDM-Übertragungsverfahren kosteneffizient übertragen. Dabei ist aufgrund der hohen Datenraten eine hochgenaue Synchronisation notwendig, die nur mit großem Aufwand zu realisieren ist.

Werden Basisstationen derartiger OFDM-Mobilfunksysteme hinsichtlich der Zeit und/oder der Frequenz untereinander synchronisiert, so ist eine Funkzellen übergreifende Zuordnung von Funkübertragungsressourcen möglich. Diese ist Voraussetzung dafür, dass mehrere Basisstationen eine Anzahl gemeinsam zugeordneter Funkübertragungsressourcen zumindest teilweise gleichzeitig verwenden können. Durch geeignete Zuordnung von Funkübertragungsressourcen zu den einzelnen Funkzellen können Interzell-Interferenzen zwischen den Funkzellen reduziert werden.

Es ist Aufgabe der vorliegenden Erfindung, für ein zellulares Funkübertragungssystem ein schnell durchzuführendes Synchronisationsverfahren anzugeben, das mit geringem zusätzlichem Aufwand realisierbar ist.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren signalisieren bzw. senden die Basisstationen jeder Funkzelle in Abwärtsrichtung Pilotsignale aus, die den jeweiligen Basisstationen individuell zugeordnet sind.

Ein betrachtetes Funkkommunikationsendgerät einer ersten Funkzelle empfängt dabei sowohl das Pilotsignal einer Basisstation, die der ersten Funkzelle zugeordnet ist, als auch Pilotsignale von benachbarten weiteren Basisstationen. Anhand der Pilotsignale wird seitens des Funkkommunikationsendgeräts, das bevorzugt als Mobilstation ausgebildet ist, eine Zeitabweichung und/oder eine Frequenzabweichung zwischen den empfangenen Pilotsignalen detektiert und basierend darauf wird ein entsprechender Zeit- und/oder Frequenz-Synchronisationswert bestimmt.

Der Synchronisationswert wird an die zugeordnete erste Basisstation zurückgemeldet, die diesen Synchronisationswert bei der eigenen Zeit- und/oder Frequenz-Synchronisation berücksichtigt oder verwendet.

Weitere Funkkommunikationsendgeräte bzw. Mobilstationen der betrachteten ersten Funkzelle bilden ihrerseits entsprechende Synchronisationswerte und melden diese an die erste Basisstation zurück. Dadurch beeinflussen die zur ersten Basisstation jeweils benachbarten Basisstationen die Synchronisierung der ersten Basisstation, ohne dabei zusätzliche Signalisierungen untereinander austauschen zu müssen.

Durch das erfindungsgemäße Synchronisationsverfahren werden mit großem Aufwand auszutauschende zusätzliche Signalisierungen zwischen den Basisstationen vermieden und damit wertvolle Funkübertragungsressourcen eingespart. Diese stehen damit für gebührenpflichtige Teilnehmer-Nutzdatenübertragungen, auch als "Payload" bezeichnet, zur Verfügung.

Eine weitere Einsparung an Funkübertragungsressourcen wird erreicht, wenn nur Funkkommunikationsendgeräte bzw. Mobilstationen mit gutem Empfang bzw. mit zuverlässigen Verbindungen zur erfindungsgemäßen Synchronisation verwendet werden. Erreicht wird dies durch einen an der Mobilstation stattfindenden Vergleich der empfangenen Pilotsignale mit einem oder mehreren Schwellwerten oder mit einem durch Schwellwerte abgestuften Bereich.

Anhand des Schwellwertvergleiches wird seitens der Mobilstation entweder eine Anzahl von gut empfangenen Pilotsignalen ausgewählt, wobei nur diese ausgewählten Pilotsignale bei der Bildung des Synchronisationswerts berücksichtigt werden. Oder die Mobilstation verzichtet anhand des Schwellwertvergleichs ganz auf eine Rückmeldung an die ihr zugeordnete Basisstation, da auf den Pilotsignalen basierende Messungen als zu ungenau erachtet werden.

Dadurch erfolgt die Synchronisation einer Basisstation nur basierend auf relevanten Informationen zuverlässiger Messwerte, unzuverlässige Messwerte werden hingegen verworfen bzw. nicht betrachtet.

Dadurch, dass Mobilstationen mit schlechtem Empfang keine Synchronisationswerte zurückmelden, wird die Funkbelastung der Funkzelle, auch als "Cell-load" bezeichnet, reduziert.

Durch das erfindungsgemäße Verfahren erfolgt eine schnelle einheitliche Synchronisation, die ohne zusätzlichen Aufwand, wie beispielsweise GPS-Empfängern, realisiert wird.

Durch das erfindungsgemäße Synchronisationsverfahren werden vorteilhaft auch Intrazell-Interferenzen innerhalb einer betrachteten Funkzelle reduziert. Diese entstehen beispielsweise durch Funkkommunikationsendgeräten bzw. Mobilstationen, deren Oszillatoren bauartbedingt driften und dadurch Zeitund/oder Frequenzabweichungen beim Senden verursachen. Durch die Synchronisation wird eine Basisstation mit einfachen Mitteln auf die jeweils der entsprechenden Funkzelle zugeordneten Mobilstationen synchronisiert.

Im Folgenden wird die Erfindung anhand einer Zeichnung näher erläutert. Dabei zeigt:

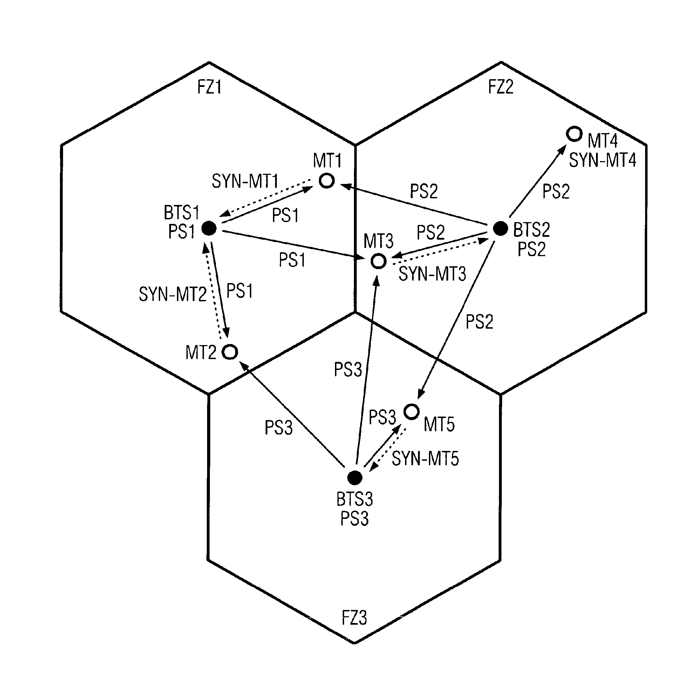

FIG 1 ein OFDM-Funkkommunikationssystem mit erfindungsgemäßer Synchronisation.

Stellvertretend sind drei benachbarte Funkzellen FZ1, FZ2 und FZ3 mit jeweils zugeordneten Basisstationen BTS1, BTS2 und BTS3 des OFDM-Funkkommunikationssystems gezeigt, das bevorzugt als Mobilfunksystem ausgebildet ist. Dabei weist eine erste Funkzelle FZ1 zwei Mobilstationen MT1 und MT2, eine zweite Funkzelle FZ2 zwei weitere Mobilstationen MT3 und MT4 und eine dritte Funkzelle FZ3 eine Mobilstation MT5 auf.

Jede einzelne der Basisstationen BTS1 bis BTS3 sendet in Abwärtsrichtung beispielsweise rundstrahlend ein basisstationsspezifisches Pilotsignal PS1 bis PS3 aus. So sendet eine erste Basisstation BTS1 ein erstes Pilotsignal PS1, eine zweite Basisstation BTS2 ein zweites Pilotsignal PS2 und eine dritte Basisstation BTS3 ein drittes Pilotsignal PS3 aus.

Seitens der Mobilstation MT1 wird sowohl das erste Pilotsignal PS1 als auch das zweite Pilotsignal PS2 empfangen. Die Mobilstation MT2 empfängt sowohl das erste Pilotsignal PS1 als auch das dritte Pilotsignal PS3, während an der Mobilstation MT3 alle drei Pilotsignale PS1 bis PS3 empfangen werden. Die Mobilstation MT4 empfängt nur das zweite Pilotsignal PS2, während die Mobilstation MT5 sowohl das dritte Pilotsignal PS3 als auch das zweite Pilotsignal PS2 empfängt.

Nachfolgend wird die Mobilstation MT3 betrachtet, die basierend auf den empfangenen drei Pilotsignalen PS1 bis PS3 eine Zeitabweichung und/oder eine Frequenzabweichung zwischen dem Pilotsignal PS2 der zugeordneten zweiten Basisstation BTS2 und den Pilotsignalen PS1 bzw. PS3 misst bzw. bestimmt. Nach einem durchgeführten Schwellwertvergleich an der Mobilstation MT3 werden alle drei Pilotsignale PS1 bis PS3 bei der Bildung eines Synchronisationswerts SYN-MT3 berücksichtigt, der nachfolgend an die zugeordnete zweite Basisstation BTS2 zurückgemeldet wird.

Dieser Synchronisationswert wird bei der Synchronisation der zweiten Basisstation BTS2 hinsichtlich der Zeit und/oder hinsichtlich der Frequenz berücksichtigt.

Alternativ dazu werden die entsprechenden Messungen der Abweichungen als Synchronisationswert an die jeweilige Basisstation zurückgemeldet, die basierend darauf die Berechnung der jeweiligen Zeit- und/oder Frequenzabweichungen vornimmt.

Wie oben beschrieben empfängt die Mobilstation MT4 lediglich das zweite Pilotsignal PS2 der ihr zugeordneten zweiten Basisstation BTS2 in ausreichender Qualität. Zur Einsparung wertvoller Funkübertragungsressourcen meldet die Mobilstation MT4 aus diesem Grund keinen Synchronisationswert SYN-MT4 an die zweite Basisstation BTS2 zurück.

Das beschriebene Verfahren wird entsprechend von den weiteren Mobilstationen MT1, MT2 und MT5 durchgeführt, die ihrerseits Synchronisationswerte SYN-MT1, SYN-MT2 und SYN-MT5 an die jeweiligen Basisstationen BTS1 und BTS3 zurückmelden. Entsprechend werden die Basisstationen BTS1 und BTS3 synchronisiert.

Im weiteren Verlauf gleichen sich die Synchronisationen der drei Basisstationen BTS1 bis BTS3 aneinander an, indem die jeweiligen Basisstationen BTS1 bis BTS3 ihre interne Zeitreferenz und/oder Frequenzreverenz entsprechend nachjustieren.

Werden bei Zeitschlitz-Vielfachzugriffsverfahren die jeweiligen Pilotsignale rahmenweise wechselnd ausgewählt bzw. den Basisstationen zugeordnet, wird vorteilhafterweise der Empfang beispielsweise durch alternierende Frequenzwahl innerhalb einer betrachteten Funkzelle verbessert.

In einer vorteilhaften Weiterbildung der Erfindung wird der Schwellwert innerhalb einer betrachteten Funkzelle seitens der Basisstation vorgegeben und an die der Funkzelle zugeordneten Funkkommunikationsendgeräte, die ortsfest oder mobil sein können, übertragen. Durch diese Maßnahme wird die Anzahl an Funkkommunikationsendgeräten, die zur Synchronisation beitragen, mit geringem Aufwand gesteuert und Überlastungen der zugeordneten Basisstation bzw. der Funkübertragung vermieden.

Alternativ dazu ist es möglich, zur Vermeidung einer Überlast-Situation die Anzahl an rückmeldenden Funkkommunikationsendgeräten seitens der Basisstation mit anderen Mitteln bzw. Verfahren zu steuern, wie sie beispielsweise aus dem UMTS/UTRAN-Standard bekannt sind. In diesem Standard sind als Funktionen eine Admission Control, eine Congestion Control, ein System Information Broadcasting und eine Konfiguration des Funknetzes implementiert, um Überlastsituationen im Funknetz zu vermeiden.

Als ortsfest installierte Funkkommunikationsendgeräte sind beispielsweise so genannte "Repeater" oder Spezialempfänger verwendbar.

Der Schwellwert kann seitens der Basisstation als Rundsendenachricht oder als teilnehmerindividuelle Nachricht übertragen werden.

In einer weiteren vorteilhaften Weiterbildung der Erfindung werden seitens einer betrachteten Basisstation neben den Synchronisationswerten von Mobilstationen der eigenen Funkzelle auch Synchronisationswerte der Mobilstationen benachbarter Funkzellen empfangen und bei der eigenen Synchronisation berücksichtigt bzw. verwendet. Durch diese Maßnahme wird einerseits der Synchronisationsvorgang beschleunigt und andererseits müssen netzseitig weniger Signalisierungen übertragen werden.

Alternativ dazu ist es möglich, dass eine Mobilstation einer betrachteten Funkzelle durch zyklisches Umbuchen auf entsprechende Funkübertragungsressourcen bzw. Trägerfrequenzen den von ihr gebildeten Synchronisationswert bzw. entsprechende Messwerte an eine benachbarte Basisstation übermittelt.

Die Detektion seitens der Mobilstationen wird verbessert, wenn bei einem Zeitschlitz-Vielfachzugriffsverfahren das jeweilige Pilotsignal am Ende eines Rahmens übertragen wird.

Wird ein OFDM-Funkübertragungsverfahren zur Datenübertragung verwendet, so wird der Empfang verbessert, wenn das Pilotsignal einer betrachteten Basisstation durch mindestens zwei Subträgerfrequenzen gebildet wird, die bevorzugt unmittelbar benachbart zueinander sind.

Wird das Pilotsignal durch mindestens zwei aufeinander folgende Symbole gebildet, wobei die aufeinander folgenden Symbole dem jeweiligen Pilotsignal-Subträger zugeordnet sind, erfolgt bei einem Frequency-Reuse="1" in einer betrachteten Funkzelle ein verbesserter Empfang der Pilotsignale.

Es ist möglich, basierend auf einer ermittelten Phasenrotation zwischen empfangenen Symbolen unterschiedlicher Pilotsignal-Subträger eine Zeitabweichung zu bestimmen und/oder eine Frequenzabweichung durch Ermittlung einer Phasenrotation aufeinander folgender Symbole eines Pilotsignal-Subträgers zu bestimmen.

Werden die zur Pilotsignalübertragung verwendeten Subträgerfrequenzen aus einer vorbestimmten Menge ausgewählt und weisen die den Basisstationen zuordenbaren Pilotsignale untereinander ein nicht benutztes Frequenzband bzw. Subträger-Frequenzband auf, wird ebenfalls die Detektion vereinfacht.

## Patentansprüche

1. Verfahren zur Synchronisation eines in Funkzellen (FZ1, FZ2, FZ3) aufgeteilten Funkkommunikationssystems, bei dem in den Funkzellen (FZ1, ...) Daten mittels Vielfachzugriffsverfahren zwischen einer der jeweiligen Funkzelle (FZ1, ...) zugeordneten Basisstation (BTS1, BTS2, BTS3) einerseits und Funkkommunikationsendgeräten (MT..) der Funkzelle andererseits übertragen werden,
**dadurch gekennzeichnet,**
- **dass** jede Basisstation (FZ1, ...) ein individuell zugeordnetes Pilotsignal (PS1, PS2, PS3) in einer Abwärtsrichtung signalisiert,
- **dass** zumindest ein Funkkommunikationsendgerät (MT1) einer ersten Funkzelle (FZ1) sowohl das Pilotsignal (PS1) einer ersten Basisstation (BTS1), die der ersten Funkzelle (FZ1) zugeordnet ist, als auch Pilotsignale (PS2) von zumindest einer weiteren benachbarten Basisstation (BTS2) empfängt,
- **dass** das zumindest eine Funkkommunikationsendgerät (MT1) aus den empfangenen Pilotsignalen (PS1, PS2) einen Synchronisationswert (SYN-MT1) für eine Zeitsynchronisation und/oder für eine Frequenzsynchronisation bestimmt, und
- **dass** die erste Basisstation (BTS1) den von dem zumindest einen Funkkommunikationsendgerät (MT1) zurückübertragenen Synchronisationswert (SYN-MT1) bei der eigenen Synchronisation berücksichtigt.

2. Verfahren nach Anspruch 1, **dadurch gekennzeichnet, dass** das Funkkommunikationsendgerät (MT1) die empfangenen Pilotsignale (PS1, PS2) mit zumindest einem vorgegebenen Schwellwert vergleicht und anhand des Vergleichs eine ausgewählte Anzahl von Pilotsignalen (PS1, PS2) bei der Bestimmung des Synchronisationswerts (SYN-MT1) berücksichtigt.

3. Verfahren nach Anspruch 1 oder 2, **dadurch gekennzeichnet, dass** das Funkkommunikationsendgerät (MT1) gemessene Zeitund/oder Frequenzabweichungen zwischen den Pilotsignalen als Synchronisationswert an die Basisstation (BTS1) zurückmeldet.

4. Verfahren nach Anspruch 2 oder 3, **dadurch gekennzeichnet, dass** für zumindest eine Funkzelle (FZ1, ...) der Schwellwert von der der Funkzelle (FZ1, ...) zugeordneten Basisstation (BTS1, ...) festgelegt und an die Funkkommunikationsendgeräte (MT..), die der Funkzelle (FZ1, ...) zugeordnet sind, übertragen wird.

5. Verfahren nach einem der vorhergehenden Ansprüche, **dadurch gekennzeichnet, dass** die erste Basisstation Synchronisationswerte von Funkkommunikationsendgeräten benachbarter Funkzellen empfängt und bei der eigenen Synchronisation berücksichtigt.

6. Verfahren nach einem der vorhergehenden Ansprüche, **dadurch gekennzeichnet, dass** der Basisstation ein zufällig ausgewähltes Pilotsignal zugeordnet wird.

7. Verfahren nach einem der vorhergehenden Ansprüche, **dadurch gekennzeichnet, dass** das Vielfachzugriffsverfahren eine Zeitschlitz-Vielfachzugriffskomponente und/oder eine Frequenz-Vielfachzugriffskomponente und/oder eine CDMA-Vielfachzugriffskomponente verwendet.

8. Verfahren nach Anspruch 7, **dadurch gekennzeichnet, dass** bei einem Zeitschlitz-Vielfachzugriffsverfahren das Pilotsignal rahmenweise wechselnd ausgewählt und/oder am Ende eines Rahmens übertragen wird.

9. Verfahren nach einem der vorhergehenden Ansprüche, **dadurch gekennzeichnet, dass** zur Datenübertragung ein OFDM-Funkübertragungsverfahren oder ein TDD-Funkübertragungsverfahren oder ein FDD-Funkübertragungsverfahren verwendet wird.

10. Verfahren nach Anspruch 9, **dadurch gekennzeichnet, dass** bei einem OFDM-Funkübertragungsverfahren das Pilotsignal durch mindestens zwei Subträger gebildet wird.

11. Verfahren nach Anspruch 10, **dadurch gekennzeichnet, dass** das Pilotsignal durch mindestens zwei unmittelbar benachbarte Subträger gebildet wird.

12. Verfahren nach Anspruch 10 oder 11, **dadurch gekennzeichnet, dass** das Pilotsignal durch mindestens zwei aufeinanderfolgende Symbole gebildet wird, wobei jedes Symbol jeweils einem Pilotsignal-Subträger zugeordnet ist und/oder wobei jeweils zwei aufeinanderfolgende Symbole jeweils einem Pilotsignal-Subträger zugeordnet sind.

13. Verfahren nach Anspruch 12, **dadurch gekennzeichnet,**
- **dass** basierend auf einer ermittelten Phasenrotation zwischen empfangenen Symbolen unterschiedlicher Pilotsignal-Subträger eine Zeitabweichung bestimmt wird, und/oder
- **dass** eine Frequenzabweichung durch Ermittlung einer Phasenrotation aufeinanderfolgender Symbole eines Pilotsignal-Subträgers bestimmt wird.

14. Verfahren nach einem der vorhergehenden Ansprüche, **dadurch gekennzeichnet, dass** zur Pilotsignalübertragung verwendete Frequenzen bzw. Subträgerfrequenzen aus einer vorbestimmten Menge derart ausgewählt werden, dass die den Basisstationen zuordenbaren Pilotsignale untereinander ein nichtbenutztes Frequenzband bzw. Subträgerfrequenzband aufweisen.

15. Basisstation, **gekennzeichnet durch** Mittel zur Durchführung des Verfahrens nach einem der Ansprüche 1 bis 14.

16. Funkkommunikationsendgerät, **gekennzeichnet durch** Mittel zur Durchführung des Verfahrens nach einem der Ansprüche 1 bis 14.

17. Funkkommunikationssystem, **gekennzeichnet durch** mindestens eine Basisstation nach Anspruch 15.

18. Funkkommunikationssystem, **gekennzeichnet durch** mindestens ein Funkkommunikationsendgerät nach Anspruch 16.
